# EUROPEAN PATENT APPLICATION

(11) **EP 3 088 457 A1**
(43) Date of publication of application: **02.11.2016**
(21) Application number: 14875784.2
(22) Date of filing: 22.12.2014
(51) Int. Cl.: C08L 9/02, C08K 5/17, C08K 7/02, C08L 13/00, F16G 1/00

(54) **CROSSLINKABLE NITRILE RUBBER COMPOSITION AND RUBBER CROSSLINKED PRODUCT**

(30) Priority: 24.12.2013 JP 2013264915
(71) Applicant: Zeon Corporation, Tokyo 100-8246 (JP)
(72) Inventor: NAKASHIMA, Tomonori, Tokyo 100-8246 (JP); INOUE, Sayaka, Tokyo 100-8246 (JP)
(74) Representative: Adam, Holger
(86) International application number: PCT/JP2014/083851
(87) International publication number: WO 2015/098806

(57) **Abstract**

A cross-linkable nitrile rubber composition comprising a highly saturated nitrile rubber (a) containing α,β-ethylenically unsaturated nitrile monomer units and α,β-ethylenically unsaturated dicarboxylic acid monoester monomer units and having an iodine value of 120 or less, organic staple fiber (b) with an average fiber length of 0.1 to 12 mm, and a polyamine cross-linking agent (c) is provided. According to the present invention, a cross-linkable nitrile rubber composition able to give cross-linked rubber excellent in tensile stress and low heat buildup can be provided.

## Description

### TECHNICAL FIELD

The present invention relates to a cross-linkable nitrile rubber composition able to give cross-linked rubber excellent in tensile stress and low heat buildup and to a cross-linked rubber obtained using that cross-linkable nitrile rubber composition.

### BACKGROUND ART

Since the past, nitrile rubber (acrylonitrile-butadiene copolymer rubber) has been used as a material for rubber parts for automobiles such as a hose, belt, and tube making use of its oil resistance, mechanical properties, chemical resistance, etc. Further, highly saturated nitrile rubber obtained by saturating the carbon-carbon double bonds in the polymer main chain of nitrile rubber is further excellent in heat resistance, so is being used for rubber parts such as a seal, belt, hose, and diaphragm.

In view of this sitation, Patent Document 1 proposes a nitrile rubber composition containing a hydrogenated nitrile rubber containing α,β-ethylenically unsaturated dicarboxylic acid monoester monomer units, a polyamine-based cross-linking agent, and a basic cross-linking accelerator. By using this composition, a cross-linked rubber excellent in heat resistance, bending fatigue resistance, etc. and low in compressive set is obtained.

On the other hand, in recent years, greater demands for quality have been made in the market. In particular, in industrial use belts etc., higher loads are being handled. Therefore, from the viewpoints of larger tensile stress, reduction of degradation due to heat buildup and energy loss at the time of rotation, a cross-linked rubber excellent in low heat buildup is being sought. However, the cross-linked rubber obtained by cross-linking the nitrile rubber composition described in Patent Document 1 is not necessarily sufficient in tensile stress and low heat buildup. To meet with the higher loads in recent years, further improvement of the tensile stress and low heat buildup has been sought.

### PRIOR ART DOCUMENTS

### PATENT DOCUMENTS

Patent Document 1: Japanese Patent Publication No. 2001-55471A

### DISCLOSURE OF THE INVENTION

### PROBLEM TO BE SOLVED BY THE INVENTION

The present invention has as its object to provide a cross-linkable nitrile rubber composition able to give cross-linked rubber excellent in tensile stress and low heat buildup and to provide cross-linked rubber obtained using that cross-linkable nitrile rubber composition.

### MEANS FOR SOLVING THE PROBLEMS

The inventors engaged in intensive studies to realize this object and as a result discovered that the object can be achieved by mixing an organic staple fiber with an average fiber length of 0.1 to 12 mm and a polyamine cross-linking agent into a highly saturated nitrile rubber having α,β-ethylenically unsaturated nitrile monomer units and α,β-ethylenically unsaturated dicarboxylic acid monoester monomer units and thereby completed the present invention.

That is, according to the present invention, there is provided a cross-linkable nitrile rubber composition comprising a highly saturated nitrile rubber (a) containg α,β-ethylenically unsaturated nitrile monomer units and α,β-ethylenically unsaturated dicarboxylic acid monoester monomer units and having an iodine value of 120 or less, organic staple fiber (b) with an average fiber length of 0.1 to 12 mm, and polyamine cross-linking agent (c).

In the cross-linkable nitrile rubber composition of the present invention, preferably the organic staple fiber (b) is an aramid staple fiber, more preferably it is a copoly-p-phenylene 3,4'-oxydiphenylene tetraphthalamide staple fiber.

In the cross-linkable nitrile rubber composition of the present invention, preferably a content of the organic staple fiber (b) is 0.5 to 80 parts by weight with respect to 100 parts by weight of the highly saturated nitrile rubber (a).

In the cross-linkable nitrile rubber composition of the present invention, preferably in the highly saturated nitrile rubber (a), a ratio of content of the α,β-ethylenically unsaturated nitrile monomer units is 10 to 60 wt% and a ratio of content of the α,β-ethylenically unsaturated dicarboxylic acid monoester monomer units is 0.1 to 20 wt%.

The cross-linkable nitrile rubber composition of the present invention preferably further comprises a basic cross-linking accelerator.

Further, according to the present invention, there is provided a cross-linked rubber obtained by cross-linking any of the above cross-linkable nitrile rubber compositions. The cross-linked rubber of the present invention is preferably used as a belt.

### EFFECTS OF THE INVENTION

According to the present invention, it is possible to provide a cross-linkable nitrile rubber composition able to give a cross-linked rubber excellent in tensile stress and low heat buildup and to provide cross-linked rubber obtained using this cross-linkable nitrile rubber composition.

### DESCRIPTION OF EMBODIMENTS

### Cross-Linkable Nitrile Rubber Composition

The cross-linkable nitrile rubber composition of the present invention is a composition comprising a highly saturated nitrile rubber (a) containing α,β-ethylenically unsaturated nitrile monomer units and α,β-ethylenically unsaturated dicarboxylic acid monoester monomer units and having an iodine value of 120 or less, an organic staple fiber (b) with an average fiber length of 0.1 to 12 mm, and a polyamine cross-linking agent (c).

### Highly Saturated Nitrile Rubber (a)

The highly saturated nitrile rubber (a) used in the present invention has at least α,β-ethylenically unsaturated nitrile monomer units and α,β-ethylenically unsaturated dicarboxylic acid monoester monomer units.

The monomer forming the α,β-ethylenically unsaturated nitrile monomer units (below, sometimes referred to as "α,β-ethylenically unsaturated nitrile") is not particularly limited so long as an α,β-ethylenically unsaturated compound having a nitrile group. For example, acrylonitrile; α-halogenoacrylonitriles such as α-chloroacrylonitrile and α-bromoacrylonitrile; α-alkylacrylonitriles such as methacrylonitrile; etc. may be mentioned. Among these as well, acrylonitrile and methacrylonitrile are preferable, while acrylonitrile is particularly preferable. The α,β-ethylenically unsaturated nitrile may also be a plurality of these types used combined.

The content of the α,β-ethylenically unsaturated nitrile monomer units is preferably 10 to 60 wt% with respect to the total monomer units forming the highly saturated nitrile rubber (a), more preferably 15 to 55 wt%, furthermore preferably 20 to 50 wt%. If the content of the α,β-ethylenically unsaturated nitrile monomer units is too small, the obtained cross-linked rubber is liable to fall in oil resistance, while conversely if too large, it may fall in cold resistance.

The monomer forming the α,β-ethylenically unsaturated dicarboxylic acid monoester monomer units is not particularly limited so long as a monoester monomer of an α,β-ethylenically unsaturated dicarboxylic acid having one nonesterified unsubstituted (free) carboxyl group. The unsubstituted carboxyl group is mainly used for cross-linking. By having the α,β-ethylenically unsaturated dicarboxylic acid monoester monomer units, the obtained cross-linked rubber can be made one excellent in tensile stress and low heat buildup.

As the organic group bonding with a carbonyl group through an oxygen atom at an ester part of the α,β-ethylenically unsaturated dicarboxylic acid monoester monomer, an alkyl group, cycloalkyl group, or alkylcycloalkyl group is preferable, while an alkyl group is particularly preferable. The alkyl group as an organic group bonding with a carbonyl group is preferably one having 1 to 12 carbon atoms, more preferably 2 to 6 carbon atoms. Further, the cycloalkyl group as an organic group bonding with a carbonyl group is preferably one having 5 to 12 carbon atoms, more preferably 6 to 10 carbon atoms. Furthermore, the alkylcycloalkyl group as an organic group bonding with a carbonyl group is preferably one having 6 to 12 carbon atoms, more preferably 7 to 10 carbon atoms. If the number of carbon atoms of the organic group bonding with a carbonyl group is too small, the cross-linkable nitrile rubber composition is liable to fall in processing stability, while conversely if the number of carbon atoms is too large, the cross-linking speed may become slower and the obtained cross-linked rubber may fall in mechanical properties.

As specific examples of such an α,β-ethylenically unsaturated dicarboxylic acid monoester monomer, maleic acid monoalkyl esters such as monomethyl maleate, monoethyl maleate, monopropyl maleate, and mono-n-butyl maleate; maleic acid monoalkylcycloalkyl esters such as monocyclopentyl maleate, monocyclohexyl maleate, and monocycloheptyl maleate; maleic acid monoalkylcycloalkyl esters such as monomethylcyclopentyl maleate and monoethylcyclohexyl maleate; fumaric acid monoalkyl esters such as monomethyl fumarate, monoethyl fumarate, monopropyl fumarate, and mono-n-butyl fumarate; fumaric acid monocycloalkyl esters such as monocyclopentyl fumarate, monocyclohexyl fumarate, and monocycloheptyl fumarate; fumaric acid monoalkylcycloalkyl esters such as monomethylcyclopentyl fumarate and monoethylcyclohexyl fumarate; citraconic acid monoalkyl esters such as monomethyl citraconate, monoethyl citraconate, monopropyl citraconate, and mono-n-butyl citraconate; citraconic acid monocycloalkyl esters such as monocyclopentyl citraconate, monocyclohexyl citraconate, and monocycloheptyl citraconate; citraconic acid monoalkylcycloalkyl esters such as monomethylcyclopentyl citraconate and monoethylcyclohexyl citraconate; itaconic acid monoalkyl esters such as monomethyl itaconate, monoethyl itaconate, monopropyl itaconate, and mono-n-butyl itaconate; itaconic acid monocycloalkyl esters such as monocyclopentyl itaconate, monocyclohexyl itaconate, and monocycloheptyl itaconate; itaconic acid monoalkylcycloalkyl esters such as monomethylcyclopentyl itaconate and monoethylcyclohexyl itaconate; etc. may be mentioned.

Among these as well, from the viewpoint of the advantageous effects of the present invention becoming much more remarkable, monoesters of dicarboxylic acid having carboxyl groups at the two carbon atoms forming the α,β-ethylenically unsaturated bond such as monopropyl maleate, mono-n-butyl maleate, monopropyl fumarate, mono-n-butyl fumarate, monopropyl citraconate, and mono-n-butyl citraconate are preferable, monoalkyl esters of dicarboxylic acid having carboxyl groups at the two carbon atoms forming the α,β-ethylenically unsaturated bond are more preferable, and mono-n-butyl maleate is particularly preferable. Note that, the number of carbon atoms of the alkyl group of the monoalkyl ester of the dicarboxylic acid having carboxyl groups at the two carbon atoms forming the α,β-ethylenically unsaturated bond is preferably 2 to 6.

The content of the α,β-ethylenically unsaturated dicarboxylic acid monoester monomer units is preferably 0.1 to 20 wt% with respect to the total monomer units forming the highly saturated nitrile rubber (a), more preferably 0.2 to 15 wt%, furthermore preferably 0.5 to 10 wt%. If the content of the α,β-ethylenically unsaturated dicarboxylic acid monoester monomer units is too small, the obtained cross-linked rubber is liable to fall in tensile stress and low heat buildup, while conversely if too large, the cross-linkable nitrile rubber composition is liable to deteriorate in scorch stability and the obtained cross-linked rubber is liable to fall in fatigue resistance.

Further, the highly saturated nitrile rubber (a) used in the present invention preferably has diene monomer units and/or α-olefin monomer units in addition to the α,β-ethylenically unsaturated nitrile monomer units and α,β-ethylenically dicarboxylic acid monoester monomer units. Due to this, the obtained cross-linked rubber can be improved in rubbery elasticity.

As specific examples of the diene monomer forming the diene monomer units, C₄ or more conjugated diene monomers such as 1,3-butadiene, isoprene, 2,3-dimethyl-1,3-butadiene, and 1,3-pentadiene; C₅ to C₁₂ unconjugated diene monomers such as 1,4-pentadiene and 1,4-hexadiene; etc. may be mentioned. Among these, conjugated diene monomers are preferable, while 1,3-butadiene is more preferable.

As the α-olefin monomer forming the α-olefin monomer units, monomer with 2 to 12 carbon atoms is preferable. Specifically, ethylene, propylene, 1-butene, 4-methyl-1-pentene, 1-hexene, 1-octene, etc. may be mentioned.

When making the highly saturated nitrile rubber (a) contain diene monomer units and/or α-olefin monomer units, the ratio of these is preferably 20 to 89.9 wt% with respect to the total monomer units forming the highly saturated nitrile rubber (a), more preferably 30 to 84.8 wt%, furthermore preferably 40 to 79.5 wt%. If the content of the diene monomer units and/or α-olefin monomer units is too small, the obtained cross-linked rubber is liable to fall in rubbery elasticity, while conversely if too large, the heat resistance and stability of chemical resistance may be impaired.

The highly saturated nitrile rubber (a) used in the present invention may be obtained by copolymerization of an α,β-ethylenically unsaturated nitrile monomer, α,β-ethylenically unsaturated dicarboxylic acid monoester monomer, and diene monomer and/or α-olefin monomer and also another monomer able to copolymerize with these. As such other monomer, α,β-ethylenically unsaturated carboxylic acid ester monomer other than α,β-ethylenically unsaturated dicarboxylic acid monoester monomer, α,β-ethylenically unsaturated monocarboxylic acid monomer, α,β-ethylenically unsaturated polyvalent carboxylic acid monomer, α,β-ethylenically unsaturated polyvalent carboxylic acid anhydride monomer, aromatic vinyl monomer, fluorine-containing vinyl monomer, copolymerizable antiaging agent, etc. may be illustrated.

As the α,β-ethylenically unsaturated carboxylic acid ester monomer other than α,β-ethylenically unsaturated dicarboxylic acid monoester monomer, for example, (meth) acrylic acid alkyl ester (meaning acrylic acid alkyl ester and/or methacrylic acid alkyl ester, same below) monomers having an alkyl group with 1 to 18 carbon atoms such as methyl acrylate, ethyl acrylate, propyl acrylate, n-butyl acrylate, n-pentyl acrylate, 2-ethylhexyl acrylate, ethyl methacrylate, and propyl methacrylate; (meth) acrylic acid alkoxyalkyl ester monomer having an alkoxyalkyl group with 2 to 18 carbon atoms and an alkoxy group with 1 to 12 carbon atoms such as methoxymethyl acrylate and ethoxymethyl methacrylate; amino group-containing (meth) acrylic acid alkyl ester monomer having an alkyl groupwith 1 to 16 carbon atoms such as 2-aminoethyl acrylate and aminomethyl methacrylate; (meth) acrylic acid hydroxyalkyl ester monomer having an alkyl group with 1 to 16 carbon atoms such as 2-hydroxyethyl acrylate and 3-hydroxypropyl methacrylate; fluoroalkyl group-containing (meth) acrylic acid alkyl ester monomer having an alkyl group with 1 to 16 carbon atoms such as trifluoroethyl acrylate and difluoromethyl methacrylate; maleic acid dialkyl ester having an alkyl group with 1 to 18 carbon atoms such as dimethyl maleate and di-n-butyl maleate; fumaric acid dialkyl ester having an alkyl group with 1 to 18 carbon atoms such as dimethyl fumarate and di-n-butyl fumarate; maleic acid dicycloalkyl ester having a cycloalkyl group with 4 to 16 carbon atoms such as dicyclopentyl maleate and dicyclohexyl maleate; fumaric acid dicycloalkyl ester having a cycloalkyl group with 4 to 16 carbon atoms such as dicyclopentyl fumarate and dicyclohexyl fumarate; itaconic acid dialkyl ester having an alkyl group with 1 to 18 carbon atoms such as dimethyl itaconate and di-n-butyl itaconate; itaconic acid dicycloalkyl ester having a cycloalkyl group with 4 to 16 carbon atoms such as dicyclohexyl itaconate; etc. may be mentioned.

As the α,β-ethylenically unsaturated monocarboxylic acid monomer, acrylic acid, methacrylic acid, crotonic acid, etc. may be mentioned.

As the α,β-ethylenically unsaturated polyvalent carboxylic acid monomer, itaconic acid, fumaric acid, maleic acid, etc. may be mentioned.

As the α,β-ethylenically unsaturated polyvalent carboxylic acid anhydride monomer, maleate anhydride etc. may be mentioned.

As the aromatic vinyl monomer, styrene, α-methylstyrene, vinylpyridine, etc. may be mentioned.

As the fluorine-containing vinyl monomer, fluoroethylvinylether, fluoropropylvinylether, o-trifluoromethylstyrene, vinyl pentafluorobenzoate, difluoroethylene, tetrafluoroethylene, etc. may be mentioned.

As the copolymerizable antiaging agent,
N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline,
N-phenyl-4-(4-vinylbenzyloxy)aniline, etc. are illustrated.

These other copolymerizable monomers may be used in plurality of types together. The content of the other monomer units is preferably 50 wt% or less with respect to the total monomer units forming the highly saturated nitrile rubber (a), more preferably 40 wt% or less, furthermore preferably 10 wt% or less.

The content of the carboxyl groups in the highly saturated nitrile rubber (a) used in the present invention, that is, the number of moles of carboxyl groups per 100 g of the highly saturated nitrile rubber (a), is preferably 5×10⁻⁴ to 5×10⁻¹ ephr, more preferably 1×10⁻³ to 1×10⁻¹ ephr, furthermore preferably 5×10⁻³ to 6×10⁻² ephr. If the content of the carboxyl groups of the highly saturated nitrile rubber (a) is too small, the cross-linkable nitrile rubber composition is liable to not sufficiently cross-link and to fall in mechanical properties and compressive set resistance when made into cross-linked rubber, while conversely if too great, the cross-linkable nitrile rubber composition may deteriorate in scorch stability or the cross-linked rubber may fall in fatigue resistance.

The highly saturated nitrile rubber (a) used in the present invention has an iodine value of 120 or less, preferably 80 or less, more preferably 25 or less, furthermore preferably 15 or less. If the iodine value of the highly saturated nitrile rubber (a) is too high, the cross-linked rubber is liable to fall in heat resistance and ozone resistance.

The polymer Mooney viscosity (ML₁₊₄, 100°C) of the highly saturated nitrile rubber (a) is preferably 15 to 200, more preferably 20 to 150, furthermore preferably 30 to 120. If the polymer Mooney viscosity of the highly saturated nitrile rubber (a) is too low, the obtained cross-linked rubber is liable to fall in mechanical properties, while conversely if too high, the cross-linkable nitrile rubber composition may fall in processability.

The method of production of the highly saturated nitrile rubber (a) used in the present invention is not particularly limited. For example, the method of copolymerization of the α,β-ethylenically unsaturated nitrile monomer, α,β-ethylenically unsaturated dicarboxylic acid monoester monomer, diene monomer, and/or α-olefin monomer and other monomer able to copolymerize with these added according to need is convenient and preferable. As the polymerization method, any of the known emulsion polymerization method, suspension polymerization method, bulk polymerization method, and solution polymerization method may be used, but since the polymerization reaction is easy to control, the emulsion polymerization method is preferable. Note that, if the iodine value of the copolymer obtained by copolymerization is higher than 120, the copolymer may be hydrogenated (hydrogenation reaction) . In this case, the method of hydrogenation is not particularly limited. A known method may be employed.

### Organic Staple Fiber (b)

The organic staple fiber (b) used in the present invention is not particularly limited so long as a fibrous organic material with an average fiber length of 0.1 to 12 mm in range. Note that, the average fiber length of the organic staple fiber (b) may for example be found by using an optical microscope to take a photograph, measuring the length of 100 staple fibers randomly selected at the obtained photograph, and obtaining the arithmetic average of these. If the average fiber length is too short, the obtained cross-linked rubber is liable to fall in tensile stress, while if the average fiber length is too long, the staple fibers easily entangle with each other to form masses which are hard to disperse in the rubber composition and the desired properties are liable to be unable to be obtained any longer. The average fiber length of the organic staple fiber (b) is preferably 0.5 to 10 mm, more preferably 0.5 to 6 mm.

Further, the average fiber diameter of the organic staple fiber (b) is not particularly limited, but since the advantageous effects of the present invention become much more remarkable, it is preferably 0.5 to 100 µm, more preferably 1 to 50 µm, furthermore preferably 2 to 20 µm. Note that, the average fiber diameter of the organic staple fiber (b) can for example be found by using an optical microscope to take a photograph, measuring the sizes (diameters) of the thickest parts of 100 staple fibers randomly selected at the obtained photograph, and obtaining the arithmetic average of these. Further, the aspect ratio of the organic staple fiber (b) ("average fiber length of the organic staple fiber"/"average fiber diameter of the organic staple fiber") is not particularly limited, but is preferably 5 to 1000, more preferably 50 to 800.

As the organic staple fiber (b) used in the present invention, natural fiber such as cotton and wood cellulose fiber; fiber comprised of synthetic resin such as polyamide, polyester, polyvinyl alcohol, rayon, poly-p-phenylene benzobisoxazole, polyethylene, polypropylene, polyarylate, polyimide, polyphenylene sulfide, polyether ether ketone, polylactic acid, polycaprolactone, polybutylene succinate, and fluorine-based polymers; etc. may be illustrated. Among these as well, since the advantageous effects of the present invention become much more remarkable, stable fiber comprised of a synthetic resin is preferably used, while staple fiber comprised of a polyamide is more preferably used.

As the polyamide, aliphatic polyamide such as polycapramide, poly-ω-aminoheptanoic acid, poly-ω-amino nonic acid, polyundecaneamide, polyethylenediamine adipamide, polytetramethylene adipamide, polyhexamethylene adipamide, polyhexamethylene sebacamide, polyhexamethylene dodecamide, polyoctamethylene adipamide, and polydecamethylene adipamide; aromatic polyamide (aramides) such as poly-p-phenylene tetraphthalamide (product name "Kevlar", made by Toray-Dupont), poly-m-phenylene isophthalamide (product name "Conex", made by Teijin Technoproducts), copoly-p-phenylene 3,4'-oxydiphenylene tetraphthalamide (product name "Technora", made by Teijin Technoproducts), poly-m-xylene adipamide, poly-m-xylene pyramide, poly-m-xylene azelamide, poly-p-xylene azelamide, and poly-p-xylene decamide; etc. may be mentioned. Among these as well, from the viewpoint of beng able to further improve the cross-linked rubber in tensile stress and low heat buildup, an aromatic polyamide, that is, aramid, is preferable, poly-p-phenylene tetraphthalamide, poly-m-phenylene isophthalamide, and copoly-p-phenylene 3,4' -oxydiphenylene tetraphthalamide are more preferable, and copoly-p-phenylene 3,4'-oxydiphenylene tetraphthalamide is particularly preferable.

That is, as the staple fiber comprised of a polyamide, an aramid staple fiber is preferable, a poly-p-phenylene tetraphthalamide staple fiber, poly-m-phenylene isophthalamide staple fiber, and a copoly-p-phenylene 3,4'-oxydiphenylene tetraphthalamide staple fiber are more preferable, and a copoly-p-phenylene 3,4'-oxydiphenylene tetraphthalamide staple fiber is particularly preferable.

Note that, the organic staple fiber (b) may be chopped fiber (cut fiber), may be pulp shapes having fibrils, and further may be treated in various ways by epoxy-based binders, isocyanate-based binders, resorcinol-formaldehyde resin/latex, etc.

In the cross-linkable nitrile rubber composition of the present invention, the amount of the organic staple fiber (b) is preferably 0.5 to 80 parts by weight with respect to 100 parts by weight of the highly saturated nitrile rubber (a), more preferably 1 to 50 parts by weight, furthermore preferably 1 to 30 parts by weight. If the amount of the organic staple fiber (b) is too small, the obtained cross-linked rubber is liable to end up falling in tensile stress and low heat buildup, while if too large, when blending it with the highly saturated nitrile rubber (a) and preparing the cross-linkable nitrile rubber composition, the workability at the time of kneading is liable to deteriorate.

### Polyamine Cross-Linking Agent (c)

The polyamine cross-linking agent (c) is not particularly limited so long as a compound having two or more amino groups or a compound which becomes a form having two or more amino groups at the time of cross-linking, but a compound comprised of an aliphatic hydrocarbon or aromatic hydrocarbon in which a plurality of hydrogen atoms are substituted by amino groups or hydrazide structures (structures represented by -CONHNH₂, CO expressing a carbonyl group) is preferable.

As specific examples of the polyamine cross-linking agent (c), aliphatic polyvalent amines such as hexamethylenediamine, hexamethylenediamine carbamate, N,N-dicinnamylidene-1,6-hexanediamine, tetramethylenepentamine, and hexamethylenediamine cinnamaldehyde adduct; aromatic polyvalent amines such as 4,4-methylenedianiline, m-phenylenediamine, 4,4-diaminodiphenyl ether, 3,4-diaminodiphenyl ether, 4,4-(m-phenylenediisopropylidene)dianiline,
4,4-(p-phenylenediisopropylidene)dianiline,
2,2-bis[4-(4-aminophenoxy)phenyl]propane, 4,4-diaminobenzanilide, 4,4-bis(4-aminophenoxy)biphenyl, m-xylenediamine, p-xylenediamine, and 1,3,5-benzene triamine; polyhvalent hydrazides such as isophthalic acid dihydrazide, terephthalic acid dihydrazide, phthalic acid dihydrazide,
2, 6-naphthalene dicarboxylic acid dihydrazide, naphthalic acid dihydrazide, oxalic acid dihydrazide, malonic acid dihydrazide, succinic acid dihydrazide, glutamic acid dihydrazide, adipic acid dihydrazide, pimelic acid dihydrazide, suberic acid dihydrazide, azeleic acid dihydrazide, sebacic acid dihydrazide, brassilic acid dihydrazide, dodecanedioic acid dihydrazide, acetone dicarboxylic acid dihydrazide, fumaric acid dihydrazide, maleic acid dihydrazide, itaconic acid dihydrazide, trimellitic acid dihydrazide,
1, 3,5-benzene tricarboxylic acid dihydrazide, aconitic acid dihydrazide, and pyromellitic acid dihydrazide; may be mentioned. Among these as well, from the viewpoint of being able to make the effects of the present invention much more remarkable, aliphatic polyvalent amines and aromatic polyvalent amines are preferable, hexamethylene diamine carbamate and
2,2-bis[4-(4-aminophenoxy)phenyl]propane are more preferable, and
2,2-bis[4-(4-aminophenoxy)phenyl]propane is particularly preferable. Note that, the polyamine cross-linking agents (c) may be used as single type alone or may be used as two or more types together.

In the cross-linkable nitrile rubber composition of the present invention, the amount of the polyamine cross-linking agent (c) is 0.1 to 20 parts by weight with respect to 100 parts by weight of the highly saturated nitrile rubber (a), preferably 0.2 to 15 parts by weight, more preferably 0.5 to 10 parts by weight. If the amount of the polyamine cross-linking agent (c) is too small, the obtained cross-linked rubber is liable to deteriorate in mechanical properties, while conversely if too large, the cross-linked rubber may deteriorate in fatigue resistance.

### Other Compounding Ingredients Etc.

Further, the cross-linkable nitrile rubber composition of the present invention preferably further comprises a basic cross-linking accelerator in addition to the above ingredients. By further including a basic cross-linking accelerator, the advantageous effects of the present invention become much more remarkable.

As specific examples of the basic cross-linking accelerator, basic cross-linking accelerator which has cyclic amidine structure such as 1,8-diazabicyclo[5,4,0]undecene-7 (below, sometimes abbreviated as "DBU") and 1,5-diazabicyclo[4,3,0]nonene-5 (below, sometimes abbreviated as "DBN"), 1-methylimidazole, 1-ethylimidazole, 1-phenylimidazole, 1-benzylimidazole, 1,2-dimethylimidazole, 1-ethyl-2-methylimidazole, 1-methoxyethylimidazole, 1-phenyl-2-methylimidazole, 1-benzyl-2-methylimidazole,
1-methyl-2-phenylimidazole, 1-methyl-2-benzylimidazole,
1,4-dimethylimidazole, 1,5-dimethylimidazole, 1,2,4-trimethylimidazole,
1,4-dimethyl-2-ethylimidazole, 1-methyl-2-methoxyimidazole,
1-methyl-2-ethoxyimidazole, 1-methyl-4-methoxyimidazole,
1-methyl-2-methoxyimidazole, 1-ethoxymethyl-2-methylimidazole,
1-methyl-4-nitroimidazole, 1,2-dimethyl-5-nitroimidazole,
1,2-dimethyl-5-aminoimidazole, 1-methyl-4-(2-aminoethyl)imidazole,
1-methylbenzoimidazole, 1-methyl-2-benzylbenzoimidazole,
1-methyl-5-nitrobenzoimidazole, 1-methylimidazoline,
1,2-dimethylimidazoline, 1,2,4-trimethylimidazoline,
1,4-dimethyl-2-ethylimidazoline, 1-methyl-phenylimidazoline,
1-methyl-2-benzylimidazoline, 1-methyl-2-ethoxyimidazoline,
1-methyl-2-heptylimidazoline, 1-methyl-2-undecylimidazoline,
1-methyl-2-heptadecylimidazoline, 1-methyl-2-ethoxymethylimidazoline, and 1-ethoxymethyl-2-methylimidazoline; guanidine-based basic cross-linking accelerator such as tetramethylguanidine, tetraethylguanidine,
diphenylguanidine, 1,3-di-o-tolylguanidine, and o-tolylbiguanide; aldehyde amine-based basic cross-linking accelerator such as n-butylaldehyde aniline, and acetoaldehyde ammonia; etc. may be mentioned. Among these as well, guanidine-based basic cross-linking accelerator and basic cross-linking accelerator having cyclic amidine structure are preferable, basic cross-linking accelerator having cyclic amidine structure is more preferable, 1,8-diazabicyclo[5,4,0]undecene-7 and 1,5-diazabicyclo[4,3,0]nonene-5 are furthermore preferable, and 1,8-diazabicyclo[5,4,0]undecene-7 is particularly preferable. Note that, the basic cross-linking accelerator having cyclic amidine structure may also form salt with organic carboxylic acid, alkyl phosphoric acid, etc.

In the case of adding a basic cross-linking accelerator, the amount in the cross-linkable nitrile rubber composition of the present invention is preferably 0.1 to 20 parts by weight with respect to 100 parts by weight of the highly saturated nitrile rubber (a), more preferably 0.2 to 15 parts by weight, furthermore preferably 0.5 to 10 parts by weight. If the amount of the basic cross-linking accelerator is too small, the cross-linkable nitrile rubber composition will sometimes become too slow in cross-linking speed and the cross-linking density will sometimes fall. On the other hand, if the amount is too large, the cross-linkable nitrile rubber composition will sometimes become too fast in cross-linking speed result in scorching or the storage stability will sometimes be impaired.

Further, in the cross-linkable nitrile rubber composition of the present invention, in addition to the above ingredients, compounding ingredients normally used in the rubber processing field, for example, a cross-linking accelerator other than the basic cross-linking accelerator, cross-linking aid, cross-linking retarder, antiaging agent, antioxidant, photo stabilizer, scorch preventer such as primary amines, activator such as diethyleneglycol, plasticizer, processing aid, slip agent, tackifier, lubricant, flame retardant, antifungal agent, acid acceptor, antistatic agent, pigment, carbon black, silica, etc. may be added. The amounts of these compounding ingredients are not particularly limited so long as the advantageous effects of the present invention are not impaired. Amounts corresponding to the objective may be suitably added.

As the carbon black, for example, furnace black, acetylene black, thermal black, channel black, austin black, graphite, etc. may be mentioned. These may be used as single type or as a plurality of types together.

As the silica, natural silica such as quartz powder and silica powder; synthetic silica such as silicic anhydride (silica gel, Aerosil, etc.) and hydrous silicic acid; etc. may be mentioned. Among these as well, synthetic silicas are preferable. Further, these silicas may be treated at the surfaces by a silane coupling agent etc.

The silane coupling agent is not particularly limited, but as specific examples, silane coupling agent containing sulfur such as γ-mercaptopropyltrimethoxysilane, γ-mercaptomethyltrimethoxysilane, γ-mercaptomethyltriethoxirane, γ-mercaptohexamethyldisilazane, bis(3-triethoxysilylpropyl)tetrasulfane, and bis(3-triethoxysilylpropyl)disulfane; epoxy group-containing silane coupling agent such as γ-glycidoxypropyltrimethoxysilane, γ-glycidoxypropylmethyldimethoxysilane,
β-(3,4-epoxycyclohexyl)ethyltrimethoxysilane,
γ-mercaptopropyltrimethoxysilane, and
γ-glycidoxypropylmethyldiethoxysilane; amino group-containing silane coupling agent such as N-(β-aminoethyl)-γ-aminopropyltrimethoxysilane, γ-aminopropyltrimethoxysilane, γ-aminopropyltriethoxysilane, N-2-(aminoethyl)-3-aminopropyltrimethoxysilane,
N-2-(aminoethyl)-3-aminopropyltriethoxysilane, and
3-triethoxysilyl-N-(1,3-dimethyl-butylidene)propylamine, N-phenyl-3-aminopropyltrimethoxysilane; (meth)acryloxy group-containing silane coupling agent such as γ-methacryloxypropyltrimethoxysilane, γ-methacryloxypropyltris(β-methoxyethoxy)silane,
γ-methacryloxypropylmethyldimethoxysilane,
γ-methacryloxypropylmethyldiethoxysilane,
γ-methacryloxypropyltriethoxysilane, and γ-acryloxypropyltrimethoxysilane; vinyl group-containing silane coupling agent such as vinyltrimethoxysilane, vinyltriethoxysilane, vinyltris(β-methoxyethoxy)silane, vinyltrichlorosilane, and vinyltriacetoxysilane; chloropropyl group-containing silane coupling agents such as
3-chloropropyltrimethoxysilane; isocyanate group-containing silane coupling agent such as 3-isocyanate propyltriethoxysilane; styryl group-containing silane coupling agent such as p-styryltrimethoxysilane; ureido
group-containing silane coupling agent such as 3-ureidopropyltriethoxysilane; allyl group-containing silane coupling agent such as diallyldimethylsilane; alkoxy group-containing silane coupling agent such as tetraethoxysilane; phenyl group-containing silane coupling agent such as
diphenyldimethoxysilane; fluoro group-containing silane coupling agent such as trifluoropropyltrimethoxysilane; alkyl group-containing silane coupling agent such as isobutyltrimethoxysilane and cyclohexylmethyldimethoxysilane; aluminum-based coupling agent such as acetoalkoxyaluminum diisopropylate; titanate-based coupling agent such as isopropyltriisostearoyl titanate, isopropyltris(dioctylpyrophosphate)titanate,
isopropyltri(N-aminoethyl-aminoethyl)titanate, tetraoctyl bis(ditridecylphosphite)titanate, tetra(2,2-diallyloxymethyl-1-butyl) bis(ditridecyl)phosphite titanate, bis(dioctylpyrophosphate)oxyacetate titanate, bis(dioctylpyrophosphate)ethylene titanate, tetraisopropyl bis(dioctylphosphite)titanate, and isopropyltriisostearoyl titanate; etc. may be mentioned. These may be used as single type or as a plurality of types together.

The plasticizer is not particularly limited, but a trimellitic acid-based plasticizer, pyromellitic acid-based plasticizer, ether ester-based plasticizer, polyester-based plasticizer, phthalic acid-based plasticizer, adipic acid ester-based plasticizer, phosphoric acid ester-based plasticizer, sebacic acid ester-based plasticizer, alkylsulfonic acid ester compound plasticizer, epoxylated plant oil-based plasticizer, etc. maybe used. As specific examples, tri-2-ethylhexyl trimellitate, trimellitic acid isononyl ester, trimellitic acid-containing linear alkyl ester, dipentaerythritol ester, pyromellitic acid 2-ethylhexyl ester, polyether ester (molecular weight 300 to 5000 or so), bis[2-(2-butoxyethoxy)ethyl] adipate, dioctyl adipate, adipic acid-based polyester (molecular weight 300 to 5000 or so), dioctyl phthalate, diisononyl phthalate, dibutyl phthalate, tricresyl phosphate, dibutyl sebacate, alkyl sulfonic acid phenyl ester, epoxylated soybean oil, etc. may be mentioned. These may be used as single type or as a plurality of types together.

Furthermore, the cross-linkable nitrile rubber composition of the present invention may contain rubber other than the above highly saturated nitrile rubber (a) in a range where the advantageous effects of the present invention are not impaired.

As such rubber, acrylic rubber, ethylene-acrylic acid copolymer rubber, styrene-butadiene copolymer rubber, polybutadiene rubber, ethylene-propylene copolymer rubber, ethylene-propylene-diene ternary copolymer rubber, epichlorohydrin rubber, urethane rubber, chloroprene rubber, silicone rubber, fluororubber, natural rubber, polyisoprene rubber, etc. may be mentioned.

When mixing in a rubber other than the highly saturated nitrile rubber (a), the amount in the cross-linkable nitrile rubber composition is preferably 30 parts by weight or less with respect to 100 parts by weight of the highly saturated nitrile rubber (a), more preferably 20 parts by weight or less, furthermore preferably 10 parts by weight or less.

In the cross-linkable nitrile rubber composition of the present invention, the above ingredients are preferably prepared mixed in nonaqueous systems. The method of preparing the cross-linkable nitrile rubber composition of the present invention is not limited, but usually ingredients other than the polyamine cross-linking agent (c) and thermally unstable cross-linking aid etc. can be processed by primary kneading by a mixer such as a Bambury mixer, internal mixer, and kneader, then can be transferred to rolls etc. where the polyamine cross-linking agent (c) and thermally unstable cross-linking aid etc. can be added and secondary kneading performed.

### Cross-Linked Rubber

The cross-linked rubber of the present invention is obtained by cross-linking the above-mentioned cross-linkable nitrile rubber composition.

The cross-linked rubber of the present invention can be produced by using the cross-linkable nitrile rubber composition of the present invention and, for example, shaping it by a shaping machine corresponding to the desired shape such as an extruder, injection molding machine, press, and rolls. and heating it for a cross-linking reaction to fix the shape as a cross-linked product. In this case, the product can be cross-linked after shaping it in advance or can be cross-linked simultaneous with shaping. The shaping temperature is usually 10 to 200°C, preferably 25 to 120°C. The cross-linking temperature is usually 100 to 200°C, preferably 130 to 190°C, while the cross-linking time is usually 1 minute to 24 hours, preferably 2 minutes to 1 hour.

Further, depending on the shape, size, etc. of the cross-linked rubber, sometimes, even if the surface is cross-linked, the inside part is not sufficiently cross-linked, so it is possible to further heat the rubber for secondary cross-linking.

As the heating method, press heating, steam heating, oven heating, hot air heating, or another general method which is used for cross-linking rubber may be suitably selected.

The thus obtained cross-linked rubber of the present invention is excellent in tensile stress and low heat buildup in addition to the characteristics of highly saturated nitrile rubber of excellent oil resistance and ozone resistance.

For this reason, the cross-linked rubber of the present invention can be used for O-rings, packings, diaphragms, oil seals, shaft seals, bearing seals, well head seals, air compressor seals, seals for sealing in Freon or fluorohydrocarbons or carbon dioxide which is used for compressors for cooling devices for air-conditioners or refrigerating machines of air-conditioning systems, seals for sealing in supercritical carbon dioxide or subcritical carbon dioxide which is used for the washing media in precision washing, seals for roller devices (roller bearings, automotive hub units, automotive water pumps, linear guide devices and ball screws, etc.), valves and valve seats, BOP (blow out preventers), bladders, and other various seal members; intake manifold gaskets which are attached at connecting parts of intake manifolds and cylinder heads, cylinder head gaskets which are attached at connecting parts of cylinder blocks and cylinder heads, rocker cover gaskets which are attached at connecting parts of rocker covers and cylinder heads, oil pan gaskets which are attached at connecting parts of oil pans and cylinder blocks or transmission cases, fuel cell separator use gaskets which are attached between pairs of housings straddling unit cells provided with positive electrodes, electrolyte plates, and negative electrodes, top cover use gaskets for hard disk drives, and other various types of gaskets; printing use rolls, ironmaking use rolls, papermaking use rolls, industrial use rolls, office equipment use rolls, and other various types of rolls; flat belts (film core flat belts, cord flat belts, laminated flat belts, single type flat belts, etc.), V-belts (wrapped V-belts, low edge V-belts, etc.), V-ribbed belts (single V-ribbed belts, double V-ribbed belts, wrapped V-ribbed belt, rubber-backed V-ribbed belts, top cog V-ribbed belts, etc.), CVT use belts, timing belts, toothed belts, conveyor belts, and other various types of belts; fuel hoses, turbo air hoses, oil hoses, radiator hoses, heater hoses, water hoses, vacuum brake hoses, control hoses, air-conditioner hoses, brake hoses, power steering hoses, air hoses, marine hoses, risers, flow lines, and other various types of hoses; CVJ boots, propeller shaft boots, constant velocity joint boots, rack and pinion boots, and other various types of boots; cushion materials, dynamic dampers, rubber couplings, air springs, shock absorbers, and other attenuating member rubber parts; dust covers, automotive interior members, tires, covered cables, shoe soles, electromagnetic wave shields, binders for flexible printed circuits boards or other binders, fuel cell separators and also other broad applications in the fields of cosmetics and pharmaceuticals, fields which come into contact with food, the electronics field, and other broad ranged applications. Among these as well, the cross-linked rubber of the present invention is particularly excellent in tensile stress and low heat buildup, so is particularly suitable as a belt.

### EXAMPLES

Below, the present invention will be explained based on detailed examples, but the present invention is not limited to these examples. Note that, below, unless otherwise indicated, "parts" are based on weight. Note that the tests and evaluations were based on the following.

The ratios of contents of the monomer units forming the highly saturated nitrile rubber were measured by the following methods.

That is, the ratios of contents of the mono-n-butyl maleate units and methacrylic acid units were calculated by taking 0.2 g of 2 mm square highly saturated nitrile rubber, adding 100 ml of 2-butanone, stirring for 16 hours, then 20 ml of adding ethanol and 10 ml of water, and stirring while using a 0.02N hydrous ethanol solution of potassium hydroxide for titration at room temperature with thymol phthalein as an indicator so as to find the number of moles of carboxyl groups with respect to 100 g of highly saturated nitrile rubber, and converting the number of moles found to an amount of mono-n-butyl maleate units or methacrylic acid units.

The ratios of contents of the 1, 3-butadiene units and saturated butadiene units were calculated by measuring the iodine value before the hydrogenation reaction and after the hydrogenation reaction using highly saturated nitrile rubber (according to JIS K 6235).

The ratio of content of the acrylonitrile units was calculated by measuring the nitrogen content in the highly saturated nitrile rubber by the Kjeldahl method in accordance with JIS K6384.

### Iodine Value

The iodine value of the highly saturated nitrile rubber was measured based on JIS K 6235.

### Content of Carboxyl Groups

To 0.2 g of 2 mm square highly saturated nitrile rubber, 100 ml of 2-butanone was added and the mixture stirred for 16 hours, then 20 ml of ethanol and 10 ml of water were added and the mixture stirred. Using a 0.02N hydrous ethanol solution of potassium hydroxide, titration was performed at room temperature with thymol phthalein as an indicator so as to find the number of moles of carboxyl groups with respect to 100 g of highly saturated nitrile rubber (units: ephr).

### Mooney Viscosity (Polymer Mooney)

The Mooney viscosity of the highly saturated nitrile rubber (polymer Mooney) was measured in accordance with JIS K6300-1 (units: [ML₁₊₄, 100°C]).

### 20% Tensile Stress

The cross-linkable nitrile rubber composition was placed in a vertical 15 cm, horizontal 15 cm, depth 0.2 cm mold and pressed by a press pressure of 10 MPa while heating at 170°C for 20 minutes to obtain sheet-shaped cross-linked rubber. Next, the obtained cross-linked rubber was transferred to a gear oven and heated at 170°C for 4 hours for secondary cross-linking. The obtained sheet-shaped cross-linked rubber was punched in the grain direction in a No. 3 type dumbbell shape to obtain a test piece. Further, the obtained test piece was used to measure the 20% tensile stress in accordance with JIS K6251.

### Heat Buildup (Dynamic Viscoelasticity Test)

The same procedure was followed as with the above evaluation of the 20% tensile stress to obtain sheet-shaped cross-linked rubber, then the obtained sheet-shaped cross-linked rubber was punched to a width 10 mm and length 50 mm in the grain direction to obtain cross-linked rubber for dynamic viscoelasticity test use. Further, the obtained cross-linked rubber for dynamic viscoelasticity test use was measured using a dynamic viscoelasticity measuring device (product name "Explexor 500N", made by GABO QUALIMETER Testanlagen GmbH) under conditions of a measurement frequency: 10Hz, static strain: 1.0%, dynamic strain: 0.2%, temperature: 100°C, chuck distance: 30 mm, and measurement mode: tension mode to obtain the tanδ.

Further, the value of the obtained tanδ was indexed to measured value of Comparative Example 1 as 100. This was used as an indicator of the heat buildup. The smaller this value, the less the dynamic heat buildup and the better the low heat buildup judged.

### Synthesis Example 1 (Synthesis of Highly Saturated Nitrile Rubber (a-1))

To a reactor, 180 parts of ion exchanged water, 25 parts of concentration 10 wt% sodium dodecylbenzene sulfonate aqueous solution, 37 parts of acrylonitrile, 6 parts of mono-n-butyl maleate, and 0.5 part of t-dodecyl mercaptan (molecular weight adjuster) were charged in that order. The inside gas was replaced with nitrogen 3 times, then 57 parts of 1,3-butadiene was charged. The reactor was held at 5°C, 0.1 part of cumen hydroperoxide (polymerization initiator) was charged, then the mixture was stirred while continuing the polymerization reaction for 16 hours. Next, 0.1 part of concentration 10 wt% hydroquinone aqueous solution (polymerization terminator) was added to stop the polymerization reaction, then a water temperature 60°C rotary evaporator was used to remove the residual monomer and obtain a latex of nitrile rubber containing mono-n-butyl maleate units (solid content concentration approximately 30 wt%).

Next, to the above obtained latex, a palladium catalyst (solution of 1 wt% palladium acetate acetone solution and equal weight of ion exchanged water) was added in an autoclave to give an amount of palladium of 1000 weight ppm with respect to the dry weight of the rubber contained in the latex. The mixture was reacted by a hydrogenation reaction at a hydrogen pressure 3 MPa and temperature 50°C for 6 hours to obtain a latex of the highly saturated nitrile rubber (a-1).

Further, to the obtained latex, double the volume of methanol was added to cause it to coagulate, then this was filtered to take out the solid product (crumbs). This was dried at 60°C for 12 hours in vacuo to thereby obtain the highly saturated nitrile rubber (a-1). The composition of the obtained highly saturated nitrile rubber (a-1) was acrylonitrile units: 35.6 wt%, butadiene units (including saturated part) : 59.0 wt%, and mono-n-butyl maleate units: 5.4 wt%, the iodine value was 8, the content of carboxyl groups was 3.1×10⁻² ephr, and the polymer Mooney viscosity [ML₁₊₄, 100°C] was 53.

### Synthesis Example 2 (Synthesis of Highly Saturated Nitrile Rubber (a'-2))

To a reactor, 200 parts of ion exchanged water, 0.2 part of sodium carbonate, and 2.25 parts of fatty acid potassium soap (potassium salt of fatty acid) were added to prepare a soap aqueous solution. Further, to this soap aqueous solution, 37 parts of acrylonitrile and 0.47 part of t-dodecyl mercaptan (molecular weight adjuster) were charged in that order, the inside gas was replaced with nitrogen 3 times, then 63 parts of 1,3-butadiene was charged. The reactor was held at 5°C, 0.1 part of cumen hydroperoxide (polymerization initiator) and suitable quantities of a reducing agent and a chelating agent were charged, then the temperature was held at 5°C while performing the polymerization reaction for 16 hours. Next, 0.1 part of concentration 10 wt% hydroquinone (polymerization terminator) aqueous solution was added to stop the polymerization reaction, then a water temperature 60°C rotary evaporator was used to remove the residual monomer and obtain a latex of nitrile rubber (solid content concentration approximately 25 wt%).

Next, the above obtained latex was added to an aqueous solution of an amount of aluminum sulfate corresponding to 3 wt% of the dry weight of the rubber contained in the latex. This was stirred to coagulate the latex. The coagulated product was separated by filtering while washing them with water, then was dried at 60°C for 12 hours in vacuo to obtain the nitrile rubber. Further, the obtained nitrile rubber was dissolved in acetone to give a concentration of 12%. This was placed in an autoclave, then a
palladium-silica catalyst was added in 450 weight ppm with respect to the nitrile rubber and a hydrogenation reaction was performed at a hydrogen pressure of 3.0 MPa. After the end of the hydrogenation reaction, the product was poured into a large amount of water to cause it to coagulate, then was separated by filtering and dried to obtain highly saturated nitrile rubber (a' -2) . The composition of the obtained highly saturated nitrile rubber (a'-2) was acrylonitrile units: 36.3 wt% and butadiene units (including saturated part): 63.7 wt%, the iodine value was 9, and the polymer Mooney viscosity [ML₁₊₄, 100°C] was 63. Further, the highly saturated nitrile rubber (a'-2) was measured in accordance with the above method for the content of carboxyl groups, whereupon the content was below the detection limit and carboxyl groups were substantially not contained.

### Synthesis Example 3 (Synthesis of Highly Saturated Nitrile Rubber (a'-3))

To a reactor, 180 parts of ion exchanged water, 25 parts of concentration 10 wt% sodium dodecylbenzene sulfonate aqueous solution, 37 parts of acrylonitrile, 4 parts of methacrylic acid, and 0.5 part of t-dodecyl mercaptan (molecular weight adjuster) were charged in that order. The inside gas was replaced with nitrogen 3 times, then 59 parts of 1,3-butadiene was charged. The reactor was held at 5°C, 0.1 part of cumen hydroperoxide (polymerization initiator) was charged, then the mixture was stirred while continuing the polymerization reaction for 16 hours. Next, 0.1 part of concentration 10 wt% hydroquinone aqueous solution (polymerization terminator) was added to stop the polymerization reaction, then a water temperature 60°C rotary evaporator was used to remove the residual monomer and obtain a latex of nitrile rubber containing methacrylic acid units (solid content concentration approximately 30 wt%).

Next, the obtained latex was processed in the same way as the above Synthesis Example 1 to perform a hydrogenation reaction and obtain a latex of highly saturated nitrile rubber. This was made to coagulate, filtered, and dried in vacuo to obtain the highly saturated nitrile rubber (a'-3). The composition of the obtained highly saturated nitrile rubber (a'-3) was acrylonitrile units: 36 wt%, butadiene units (including saturated parts): 61 wt%, and methacrylic acid units: 3 wt%, the iodine value was 9, the content of carboxyl groups was 3.5×10⁻² ephr, and the polymer Mooney viscosity [ML₁₊₄, 100°C] was 68.

### Example 1

Using a Bambury mixer, 100 parts of the highly saturated nitrile rubber (a-1) obtained in Production Example 1, 40 parts of N550 carbon black (product name "Seast SO", made by Tokai Carbon), 1.5 parts of
4,4'-di-(a,a-dimethylbenzyl)diphenylamine (product name "Nocrac CD", made by Ouchi Shinko Chemical Industrial, antiaging agent), 5 parts of tri-2-ethylhexyl trimellitate (product name "Adeka Cizer C-8", made by Adeka, plasticizer), 1 part of stearic acid, and 10 parts of copoly-p-phenylene 3,4'-oxydiphenylene tetraphthalamide staple fiber (product name "Technora ZCF T323SB 1 mm", made by Teij in Technoproducts, aramid staple fiber of average fiber length 1 mm, average fiber diameter 12 µm) were kneaded. Next, the kneaded product was transferred to rolls, then 6.3 parts of
2,2-bis[4-(4-aminophenoxy)phenyl]propane (polyamine cross-linking agent) and 4 parts of 1,8-diazabicyclo[5,4,0]undecene-7 (DBU) (product name "RHENOGRAN XLA-60 (GE2014)", made by RheinChemie, DBU 60% (including part becoming zinc dialkyldiphosphate salt), basic cross-linking accelerator) were added and kneaded to obtain a cross-linkable nitrile rubber composition.

Further, the obtained cross-linkable nitrile rubber composition was used in accordance with the above methods to evaluate and test for the 20% tensile stress and heat buildup. The results are shown in Table 1.

### Example 2

Except for using, instead of 10 parts of the average fiber length 1 mm copoly-p-phenylene 3,4'-oxydiphenylene tetraphthalamide staple fiber, 3.5 parts of average fiber length 3 mm copoly-p-phenylene 3,4'-oxydiphenylene tetraphthalamide staple fiber (product name "Technora ZCF T323SB 3 mm", made by Teijin Technoproducts, average fiber length 3 mm, aramid staple fiber of average fiber diameter 12 µm), the same procedure was followed as in Example 1 to prepare a cross-linkable nitrile rubber composition and the same procedure was followed to evaluate it. The results are shown in Table 1.

### Comparative Example 1

Except for not mixing in the average fiber length 1 mm copoly-p-phenylene 3,4'-oxydiphenylene tetraphthalamide staple fiber, the same procedure was followed as in Example 1 to prepare a cross-linkable nitrile rubber composition and the same procedure was followed to evaluate it. The results are shown in Table 1.

### Comparative Example 2

Except for not mixing in 6.3 parts of
2,2-bis[4-(4-aminophenoxy)phenyl]propane and 4 parts of
1,8-diazabicyclo[5,4,0]-undecene-7 (DBU) and, instead of these, mixing in 8 parts of 1,3-bis(t-butylperoxyisopropyl) benzene 40% product (product name "Vul Cup 40KE", made by Arkema, organic peroxide cross-linking agent), the same procedure was followed as in Example 1 to prepare a cross-linkable nitrile rubber composition and the same procedure was followed to evaluate it. The results are shown in Table 1.

### Comparative Example 3

Except for using, instead of 100 parts of the highly saturated nitrile rubber (a-1), 100 parts of the highly saturated nitrile rubber (a'-2) obtained in Synthesis Example 2, the same procedure was followed as in Comparative Example 2 to prepare a cross-linkable nitrile rubber composition and the same procedure was followed to evaluate it. The results are shown in Table 1.

### Comparative Example 4

Except for using, instead of 10 parts of the average fiber length 1 mm copoly-p-phenylene 3,4'-oxydiphenylene tetraphthalamide staple fiber, 3.5 parts of average fiber length 3 mm copoly-p-phenylene 3,4'-oxydiphenylene tetraphthalamide staple fiber (product name "Technora ZCF T323SB 3 mm", made by Teijin Technoproducts), the same procedure was followed as in Comparative Example 3 to prepare a cross-linkable nitrile rubber composition and the same procedure was followed to evaluate it. The results are shown in Table 1.

### Comparative Example 5

Except for using, instead of 100 parts of the highly saturated nitrile rubber (a-1), 100 parts of the highly saturated nitrile rubber (a'-3) obtained in Synthesis Example 3, the same procedure was followed as in Example 1 to prepare a cross-linkable nitrile rubber composition and the same procedure was followed to evaluate it. The results are shown in Table 1.

### Comparative Example 6

Except for not mixing in 6.3 parts of
2,2-bis[4-(4-aminophenoxy)phenyl]propane and 4 parts of
1,8-diazabicyclo[5,4,0]-undecene-7 (DBU) and, instead of these, mixing in 8 parts of 1,3-bis(t-butylperoxyisopropyl) benzene 40% product (product name: "Vul Cup 40KE", made by Arkema), the same procedure was followed as in Comparative Example 5 to prepare a cross-linkable nitrile rubber composition and the same procedure was followed to evaluate it. The results are shown in Table 1.

Table 1

**Table 1**

| | | | | Example | | Comparative Example | | | | | |
|---|---|---|---|---|---|---|---|---|---|---|---|
| | | | | 1 | 2 | 1 | 2 | 3 | 4 | 5 | 6 |
| Highly saturated nitrile rubber | | | | | | | | | | | |
| | Type | | | (a-1) | (a-1) | (a-1) | (a-1) | (a'-2) | (a'-2) | (a'-3) | (a'-3) |
| | Composition | Acrylonitrile units | (wt%) | 35.6 | 35.6 | 35.6 | 35.6 | 36.3 | 36.3 | 36 | 36 |
| | | Butadiene units | (wt%) | 59 | 59 | 59 | 59 | 63.7 | 63.7 | 61 | 61 |
| | | Mono-n-butyl maleate units | (wt%) | 5.4 | 5.4 | 5.4 | 5.4 | - | - | - | - |
| | | Methacrylic acid units | (wt%) | - | - | - | - | - | - | 3 | 3 |
| | Iodine value | | | 8 | 8 | 8 | 8 | 9 | 9 | 9 | 9 |
| | Polymer Mooney viscosity (ML₁₊₄, 100°C) | | | 53 | 53 | 53 | 53 | 63 | 63 | 68 | 68 |
| Composition of cross-linkable nitrile rubber composition | | | | | | | | | | | |
| | Highly saturated nitrile rubber (a-1) | | (parts) | 100 | 100 | 100 | 100 | | | | |
| | Highly saturated nitrile rubber (a'-2) | | (parts) | | | | | 100 | 100 | | |
| | Highly saturated nitrile rubber (a'-3) | | (parts) | | | | | | | 100 | 100 |
| | Aramid staple fiber (average fiber length: 1 mm) | | (parts) | 10 | | | 10 | 10 | | 10 | 10 |
| | Aramid staple fiber (average fiber length: 3 mm) | | (parts) | | 3.5 | | | | 3.5 | | |
| | N550 carbon black | | (parts) | 40 | 40 | 40 | 40 | 40 | 40 | 40 | 40 |
| | Tri-2-ethylhexyl trimellitate | | (parts) | 5 | 5 | 5 | 5 | 5 | 5 | 5 | 5 |
| | 4,4'-di-(*α,α*-dimethylbenzyl)diphenylamine | | (parts) | 1.5 | 1.5 | 1.5 | 1.5 | 1.5 | 1.5 | 1.5 | 1.5 |
| | Stearic acid | | (parts) | 1 | 1 | 1 | 1 | 1 | 1 | 1 | 1 |
| | 2,2-bis[4-(4-aminophenoxy)phenyl]propane | | (parts) | 6.3 | 6.3 | 6.3 | | | | 6.3 | |
| | 1,8-diazabicyclo[5,4,0]undecene-7 (60%) | | (parts) | 4 | 4 | 4 | | | | 4 | |
| | 1,3-bis(t-butylperoxyisopropyl)benzene 40% product | | (parts) | | | | 8 | 8 | 8 | | 8 |
| Evaluation of cross-linked rubber | | | | | | | | | | | |
| | 20% tensile stress | | (MPa) | 15.8 | 15.2 | 0.98 | 11.3 | 10.8 | 11.6 | unevaluatable | 10.7 |
| | Heat buildup (tan *δ* | | (Index) | 88 | 85 | 100 | 269 | 210 | 217 | | 255 |

From Table 1, cross-linked rubber obtained using a cross-linkable nitrile ruber composition containing highly saturated nitrile rubber (a-1) containing α,β-ethylenically unsaturated nitrile monomer units and
α,β-ethylenically unsaturated dicarboxylic acid monoester monomer units and having an iodine value of 120 or less, average fiber length 0.1 to 12 mm organic staple fiber, and a polyamine cross-linking agent was excellent in tensile stress and low heat buildup (Examples 1 and 2).

On the other hand, when not using organic staple fiber with an average fiber length of 0.1 to 12 mm, the result was that the obtained cross-linked rubber was low in tensile stress and inferior in low heat buildup (Comparative Example 1).

When using, instead of the polyamine cross-linking agent, an organic peroxide cross-linking agent, the result was that the obtained cross-linked rubber was low in tensile stress and inferior in low heat buildup (Comparative Example 2).

When using, as the highly saturated nitrile rubber, highly saturated nitrile rubber (a'-2) not containing α,β-ethylenically unsaturated dicarboxylic acid monoester monomer units and using, as the cross-linking agent, an organic peroxide cross-linking agent, the result was that the obtained cross-linked rubber was low in tensile stress and inferior in low heat buildup (Comparative Examples 3 and 4).

Further, when using as the highly saturated nitrile rubber, highly saturated nitrile rubber (a'-3) containing methacrylic acid units instead of α,β-ethylenically unsaturated dicarboxylic acid monoester monomer units, and using, as the cross-linking agent, a polyamine cross-linking agent, the result was that the obtained cross-linked rubber seriously foamed, the various properties could not be evaluated, and, when using an organic peroxide cross-linking agent, the various properties could be evaluated, but the tensile stress was low and the low heat buildup was also inferior (Comparative Examples 5 and 6).

## Claims

1. A cross-linkable nitrile rubber composition comprising
a highly saturated nitrile rubber (a) containg α,β-ethylenically unsaturated nitrile monomer units and α,β-ethylenically unsaturated dicarboxylic acid monoester monomer units and having an iodine value of 120 or less,
organic staple fiber (b) with an average fiber length of 0.1 to 12 mm, and
polyamine cross-linking agent (c).

2. The cross-linkable nitrile rubber composition according to claim 1, wherein the organic staple fiber (b) is an aramid staple fiber.

3. The cross-linkable nitrile rubber composition according to claim 1 or 2, wherein the organic staple fiber (b) is a copoly-p-phenylene 3,4'-oxydiphenylene tetraphthalamide staple fiber.

4. The cross-linkable nitrile rubber composition according to any one of claims 1 to 3, wherein a content of the organic staple fiber (b) is 0.5 to 80 parts by weight with respect to 100 parts by weight of the highly saturated nitrile rubber (a).

5. The cross-linkable nitrile rubber composition according to any one of claims 1 to 4, wherein in the highly saturated nitrile rubber (a), a ratio of content of the α,β-ethylenically unsaturated nitrile monomer units is 10 to 60 wt% and a ratio of content of the α,β-ethylenically unsaturated dicarboxylic acid monoester monomer units is 0.1 to 20 wt%.

6. The cross-linkable nitrile rubber composition according to any one of claims 1 to 5, further comprising a basic cross-linking accelerator.

7. A cross-linked rubber obtained by cross-linking the cross-linkable nitrile rubber composition according to any of claims 1 to 6.

8. The cross-linked rubber according to claim 7 forming a belt.
